# EUROPÄISCHE PATENTSCHRIFT

(11) **EP 3 368 252 B1**
(45) Veröffentlichungstag und Bekanntmachung des Hinweises auf die Patenterteilung: **04.12.2019**
(21) Anmeldenummer: 16784828.2
(22) Anmeldetag: 14.10.2016
(51) Int. Cl.: B26F 1/38, B26D 5/00, B26D 7/08, B23Q 15/12, B23Q 17/09, G05B 19/402

(54) **VORRICHTUNG UND VERFAHREN ZUM ULTRASCHALLSCHNEIDEN VON WERKSTÜCKEN**
DEVICE AND METHOD FOR THE ULTRASONIC CUTTING OF WORKPIECES
DISPOSITIF ET PROCÉDÉ DE DÉCOUPE AUX ULTRASONS DE PIÈCES

(30) Priorität: 26.10.2015 DE 102015220875
(43) Veröffentlichungstag der Anmeldung: 05.09.2018
(73) Patentinhaber: Bayerische Motoren Werke Aktiengesellschaft, 80809 München (DE)
(72) Erfinder: FISCHER, Stefan, 84144 Geisenhausen (DE)
(86) Internationale Anmeldenummer: PCT/EP2016/074681
(87) Internationale Veröffentlichungsnummer: WO 2017/071968

(56) Entgegenhaltungen:
- EP-A1- 0 920 977
- CN-A- 104 924 347
- GB-A- 2 087 290

## Beschreibung

Die vorliegende Erfindung eine Vorrichtung zum Ultraschallschneiden von Werkstücken. Ferner betrifft die Erfindung ein Verfahren zum Ultraschallschneiden eines Werkstücks mittels einer erfindungsgemäßen Vorrichtung. Eine Vorrichtung mit den; Merkmalen des Oberbegriffs von Anspruch 1 ist bekannt aus der Veröffentlichung GB 2 087 290 A.

Zum Zerschneiden von Werkstücken, insbesondere von Werkstücken mit fragiler Struktur oder leicht beschädigbarem und/oder temperaturempfindlichem Werkstoff, ist es von Vorteil, wenn möglichst geringe Schnittkräfte in das Werkstück eingebracht werden, um das Werkstück nicht zu beschädigen und eine "saubere" Schnittfläche zu erzeugen. Ferner ist oftmals eine Erwärmung des Werkstücks beim Schneiden zu vermeiden, insbesondere wenn hierdurch das Werkstück beschädigt werden könnte. Zum Zerschneiden derartiger Werkstücke hat sich daher das Ultraschallschneiden bewährt.

Beim Ultraschallschneiden mittels einer Vorrichtung zum Ultraschallschneiden von Werkstücken wird eine Schneide mittels eines Ultraschallgenerators in Ultraschallschwingungen mit einer Frequenz insbesondere zwischen 20 und 40 kHz versetzt. Zum Schneiden des Werkstücks wird die Schneide in einer Schneidrichtung entlang eines Schneidpfads durch das Werkstück bewegt. Durch die Ultraschallschwingungen werden beim Schneiden auftretende Trenn- sowie Reibkräfte an der Schneide erheblich reduziert. Dies hat den Vorteil, dass zum Voranbewegen der Schneide in Schneidrichtung wesentlich geringere Kräfte erforderlich sind als bei Schneiden, die nicht in Ultraschallschwingungen versetzt sind.

Oftmals ist ein Schneidpfad nicht linear sondern kurvenförmig ausgebildet. Beim Bewegen der Schneide entlang einer Kurve wirken Seitenkräfte von dem Werkstück auf die Schneide. Diese Seitenkräfte sind insbesondere von einer Bewegungsgeschwindigkeit der Schneide in Schneidrichtung, dem Werkstoff des Werkstücks, der Ausbildung der Schneide sowie der Krümmung der Schneidkurve abhängig. Ohne geeignete Gegenmaßnahmen würden diese Seitenkräfte die Schneide von dem Schneidpfad wegbiegen und somit eine unerwünschte Schnittkontur in dem Werkstück erzeugen. Eine geeignete Gegenmaßnahme ist das Verändern eines Anstellwinkels der Schneide relativ zum Werkstück beziehungsweise der Werkstückoberfläche, so dass dieses den Seitenkräften entgegenwirkt. Unter einem Anstellwinkel wird erfindungsgemäß ein Winkel verstanden, der zwischen der Werkstückoberfläche und der Schneide sowie rechtwinklig zur Schnittrichtung ausgebildet ist.

Das Erzeugen eines Schnitts auf einem Werkstück entlang einem Schneidpfad wird auch als Schneidaufgabe bezeichnet. Für jede Schneidaufgabe ist ein erneutes Konfigurieren der Vorrichtung zum Ultraschallschneiden von Werkstücken erforderlich, um eine optimale Bewegung der Schneide zum Werkstück entlang dem Schneidpfad sicherzustellen, so dass Seitenkräfte optimal kompensiert werden. Hierbei spielt die Wahl des Anstellwinkels der Schneide zum Werkstück eine wesentliche Rolle.

Bekannte Vorrichtungen zum Ultraschallschneiden von Werkstücken haben insbesondere den Nachteil, dass die ein Ermitteln eines geeigneten Anstellwinkels nur sehr aufwändig möglich ist. Oftmals ist dies nur empirisch durch Erzeugen einer Vielzahl von Schnitten auf identischen Schneidpfaden sowie identischen Werkstücken, unter Verwendung unterschiedlicher Anstellwinkel möglich. Ein Offlineprogrammieren einer Ultraschallschneidvorrichtung ist insbesondere wegen der vielen Einflussparameter der Schneidkräfte derzeit technisch nicht praktikabel, so dass zur Vorbereitung einer neuen Serie von Ultraschallschnitten die Ultraschallschneidvorrichtung aufwändig eingelernt werden muss. Dies ist sowohl zeit- als auch kostenintensiv. Ferner kann mit herkömmlichen Vorrichtungen kein dauerhaftes, prozesssicheres Schneiden gewährleistet werden, da z.B. die Schärfe der Schneide, die Umgebungstemperatur oder das Gefüge des Werkstücks variieren können und somit ggf. variierende Seitenkräfte bewirken.

Es ist daher Aufgabe der vorliegenden Erfindung, die voranstehend beschriebenen Nachteile bei einer Vorrichtung sowie einem Verfahren zum Ultraschallschneiden von Werkstücken zumindest teilweise zu beheben. Insbesondere ist es Aufgabe der vorliegenden Erfindung eine Vorrichtung zum Ultraschallschneiden von Werkstücken bereitzustellen, die auf eine einfache sowie kostengünstige Art und Weise die Prozesssicherheit eines Ultraschallschneidprozesses verbessert, wobei die Vorrichtung zur Durchführung neuer Schneidaufgaben mit einem geringeren Aufwand konfigurierbar ist. Überdies ist es die Aufgabe der vorliegenden Erfindung, ein Verfahren zum Ultraschallschneiden von Werkstücken zu schaffen, das auf eine einfache und kostengünstige Art und Weise durchführbar ist und eine verbesserte Prozesssicherheit aufweist.

Voranstehende Aufgabe wird gelöst durch eine Vorrichtung zum Ultraschallschneiden von Werkstücken mit den Merkmalen des Anspruchs 1 sowie durch ein Verfahren zum Ultraschallschneiden eines Werkstücks mit den Merkmalen gemäß Anspruch 9. Weitere Merkmale und Details der Erfindung ergeben sich aus den Unteransprüchen, der Beschreibung und den Zeichnungen. Dabei gelten Merkmale und Details, die im Zusammenhang mit der Vorrichtung zum Ultraschallschneiden von Werkstücken beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe gelöst durch eine Vorrichtung zum Ultraschallschneiden von Werkstücken, aufweisend eine Schneidführungsvorrichtung, eine an der Schneidführungsvorrichtung gehaltene Schneide mit einer Schneidlängsachse, einen Ultraschallgenerator zum Versetzen der Schneide in eine oszillierende Bewegung und eine Kontrolleinheit zum Bewegen der Schneidführungsvorrichtung zum Bewegen der Schneide auf einem Schneidpfad in eine Schneidrichtung relativ zu dem zu schneidenden Werkstück. Die Vorrichtung weist eine erste Kraftmessvorrichtung zum Messen einer quer zur Schneidlängsachse sowie quer zur Schneidrichtung auf die Schneide wirkenden IST-Seitenkraft auf. Die erste Kraftmessvorrichtung ist zur Weiterleitung von IST-Seitenkraftmesswerten an die Kontrolleinheit mit der Kontrolleinheit gekoppelt. Die Kontrolleinheit ist ausgebildet, mindestens einen Schneidparameter der Vorrichtung in Abhängigkeit der gemessenen IST-Seitenkraft zu verändern.

Die Schneidführungsvorrichtung ist zum Halten sowie zum Bewegen der Schneide in Schnittrichtung entlang dem Schneidpfad ausgebildet. Die Schneidführungsvorrichtung weist beispielsweise einen Roboterarm auf, mittels dem die Schneide relativ zum Werkstück bewegbar sowie ausrichtbar ist. Somit ist die Schneide mittels der Schneidführungsvorrichtung in eine relative Lage - also eine Position und Ausrichtung - zum Werkstück bringbar und in eine Vielzahl unterschiedlicher relativer Lagen bewegbar.

Eine Schneide kann erfindungsgemäß beispielsweise ein Schneiddraht, eine Klinge oder Dergleichen sein. Ein Schneiddraht oder eine Klinge werden im Rahmen der Erfindung gleichwohl als "Schneide" bezeichnet. Die Schneide weist eine Schneidlängsachse auf, wobei beim Schneiden die Schneidlängsachse quer, vorzugsweise senkrecht, zur Schnittrichtung angeordnet ist.

Der Ultraschallgenerator ist zum Versetzen der Schneide in eine oszillierende Bewegung mit Ultraschallfrequenz und einer Schwingungsamplitude ausgebildet. Vorzugsweise erfolgt die oszillierende Bewegung in Richtung der Schneidlängsachse.

Die Kontrolleinheit ist zum Bewegen der Schneidführungsvorrichtung ausgebildet, wobei durch Bewegen der Schneidführungsvorrichtung die Schneide bewegbar ist. Über die Kontrolleinheit ist beispielsweise ein Antrieb der Schneidführungsvorrichtung zum Bewegen der Schneide oder zum Ausrichten der Schneide beziehungsweise zum Verändern des Anstellwinkels der Schneide steuerbar und/oder regelbar. Daher ist es bevorzugt, dass die Vorrichtung Positions- und/oder Lageerfassungsmittel zur Bestimmung der relativen Position beziehungsweise relativen Lage der Schneide zum Werkstück aufweist. Vorzugsweise sind die Positions- und/oder Lageerfassungsmittel im Antrieb der Schneidführungsvorrichtung ausgebildet oder als separate Einheiten an der Vorrichtung angeordnet. Ferner ist die Kontrolleinheit ausgebildet, mindestens einen Schneidparameter der Vorrichtung in Abhängigkeit einer gemessenen IST-Seitenkraft zu verändern. Dabei wird der Schneidparameter vorzugsweise derart verändert, dass hierdurch die gemessene IST-Seitenkraft kompensiert oder zumindest teilweise kompensiert wird. Unter Kompensieren wird erfindungsgemäß ein Kompensieren der Wirkung der IST-Seitenkraft auf die Schneide verstanden. Demnach kann ein Kompensieren beispielsweise durch ein Verschwenken der Schneide erfolgen, das einer Auslenkung der Schneide durch die IST-Seitenkraft entgegengerichtet ist. Zusätzlich oder alternativ kann das Kompensieren auch ein Verringern der IST-Seitenkraft bedeuten, beispielsweise durch Verringern einer Bewegungsgeschwindigkeit der Schneide entlang dem Schneidpfad oder einer Erhöhung der Oszillationsfrequenz. Die Kontrolleinheit ist ausgebildet, mindestens einen Schneidparameter der Vorrichtung in Abhängigkeit der gemessenen IST-Seitenkraft zu verändern. D.h. die Kontrolleinheit verändert mindestens einen Schneidparameter und gibt diesen zur Bewegung der Schneidführungsvorrichtung an die Schneidführungsvorrichtung weiter.

Ein Schneidpfad ist eine Strecke, auf der der Schnitt erzeugt werden soll. Der Schneidpfad kann beispielsweise als Gerade oder Kurve verlaufen, wobei die erfindungsgemäße Vorrichtung insbesondere bei Schneidpfaden mit Kurven gegenüber herkömmlichen Ultraschallschneidvorrichtungen vorteilhaft ist. Die Schnittrichtung ist eine Richtung in die die Schneide beim Schneiden bewegt wird. Die Schnittrichtung folgt dem Verlauf des Schneidpfads. In anderen Worten beschreibt der Schneidpfad eine Veränderung der Schneidrichtung.

Als Schneidparameter werden sämtliche Parameter eines Schneidprozesses bezeichnet, wie z.B. die Bewegungsgeschwindigkeit der Schneide entlang dem Schneidpfad, der Anstellwinkel der Schneide, ein Vorlauf- beziehungsweise Nachlaufwinkel der Schneide, eine Oszillationsfrequenz oder eine Oszillationsamplitude der Schneide. Der Vorlauf- beziehungsweise Nachlaufwinkel der Schneide ist zwischen einer Achse der momentanen Bewegungsrichtung angeordnet, wobei ein Vorlaufwinkel über 90° bedeutet, dass die Schneide der Schneidführungsvorrichtung vorläuft und bei einem Nachlaufwinkel über 90° der Schneidführungsvorrichtung nachläuft. Definitionsgemäß beträgt die Summe aus Vorlauf- und Nachlaufwinkel 180°.

Durch eine gezielte Änderung der Schneidparameter ist der Schneidprozess veränderten Rahmenbedingungen, wie z.B. einer momentanen Veränderung der Schneidrichtung beziehungsweise des Schneidpfads, einer Veränderung der Werkstücks-, Schneiden- und/oder Umgebungstemperatur oder einem Verschleiß der Schneide, derart anpassbar, dass ein verbesserter beziehungsweise optimierter Schnitt durch das Werkstück erzeugbar ist. Bevorzugte Veränderungen von Schneidparametern zum Verbessern der Schnittqualität sind beispielsweise ein Reduzieren der Bewegungsgeschwindigkeit der Schneide entlang dem Schneidpfad, Verändern des Anstellwinkels derart, dass die Schneide gegen die IST-Seitenkraft angestellt ist, Einstellen eines Vorlauf- oder Nachlaufwinkels über 90° und/oder Erhöhen der Oszillationsfrequenz oder der Oszillationsamplitude.

Die erste Kraftmessvorrichtung ist zum Messen einer quer zur Schneidlängsachse sowie quer zur Schneidrichtung auf die Schneide wirkenden IST-Seitenkraft ausgebildet. Demnach wirkt die IST-Seitenkraft derart auf die Schneide, dass die Schneide hierdurch quer zum Schneidpfad auslenkbar ist. Gemessene IST-Seitenkräfte werden auch als IST-Seitenkraftmesswerte bezeichnet. Die erste Kraftmessvorrichtung weist beispielsweise ein Piezoelement und/oder einen Dehnungsmessstreifen oder Dergleichen zum Messen der IST-Seitenkraft auf. Die erste Kraftmessvorrichtung ist vorzugsweise an einer Stelle der Vorrichtung angeordnet, an der die IST-Seitenkraft besonders gut messbar ist, ohne dass hierdurch der Schneidprozess behindert beziehungsweise beeinträchtigt wird.

Die erste Kraftmessvorrichtung ist zum Weiterleiten von IST-Seitenkraftmesswerten an die Kontrolleinheit ausgebildet. Hierfür ist die erste Kraftmessvorrichtung mit der Kontrolleinheit gekoppelt, beispielsweise über eine Kabelverbindung, per Funk oder Dergleichen. Auf Basis der empfangenen IST-Seitenkraftmesswerte ist die Kontrolleinheit in der Lage, mindestens einen Schneidparameter zu verändern, wodurch die IST-Seitenkraft kompensierbar beziehungsweise zumindest teilweise kompensierbar ist. Ferner ist die IST-Seitenkraft durch Verändern geeigneter Schneidparameter reduzierbar. Erfindungsgemäß kann vorgesehen sein, dass zwei oder mehrere Schneidparameter, wie z.B. Anstellwinkel und Bewegungsgeschwindigkeit, veränderbar sind. Hierdurch sind eine Optimierung der Ausrichtung der Schneide zum Werkstück sowie eine Reduzierung der IST-Seitenkraft und folglich eine verbesserte Schnittqualität erzielbar.

Eine derartige Vorrichtung hat den Vorteil, dass mit einfachen Mitteln sowie kostengünstig eine Regelung des Schneidprozesses erfolgen kann. Durch ein regelmäßiges, vorzugsweise kontinuierliches beziehungsweise im Wesentlichen kontinuierliches Messen der IST-Seitenkräfte ist eine direkte Anpassung der Schneidparameter möglich, um somit die IST-Seitenkräfte zu kompensieren beziehungsweise teilweise zu kompensieren und hierdurch ein seitliches Abweichen der Schneide vom Schneidpfad zu vermeiden beziehungsweise zumindest zu reduzieren. Mittels der erfindungsgemäßen Vorrichtung erzeugte Schnitte weisen demnach eine besonders vorteilhafte Ausbildung auf. Ein weiterer Vorteil der erfindungsgemäßen Vorrichtung ist, dass zum Schneiden neuer Schneidaufgaben kein aufwändiges Einlernen der Vorrichtung mehr erforderlich ist, da eine Anpassung der Schneidparameter entlang dem Schneidpfad im Wesentlichen in Abhängigkeit der gemessenen IST-Seitenkräfte zuverlässig erfolgen kann. Zum Bearbeiten einer neuen Schneidaufgabe ist demnach beispielsweise im Wesentlichen der Schneidpfad an die Kontrolleinheit zu übermitteln. Dies kann offline erfolgen und erfordert keine weiteren empirischen Ermittlungen von vorteilhaften Schneidparametern. Eine Auslastung sowie Flexibilität der Vorrichtung zum Ultraschallschneiden von Werkstücken ist somit wesentlich verbessert.

Gemäß einer bevorzugten Weiterentwicklung der Erfindung kann bei einer Vorrichtung vorgesehen sein, dass die erste Kraftmessvorrichtung zum Messen einer senkrecht zur Schneidlängsachse sowie senkrecht zur Schneidrichtung auf die Schneide wirkenden IST-Seitenkraft ausgebildet ist. Eine derart gerichtete IST-Seitenkraft hat einen besonders starken Einfluss auf eine Auslenkung der Schneide quer zur Schneidrichtung. Daher ist das Messen einer derart gerichteten IST-Seitenkraft zum Anpassen des mindestens einen Schneidparameters besonders vorteilhaft.

Es kann vorgesehen sein, dass die Vorrichtung eine erste Vergleichseinheit aufweist, die ausgebildet ist, durch Vergleichen der ermittelten IST-Seitenkraft mit einer vorgegebenen SOLL-Seitenkraft in Abhängigkeit der Bewegungsgeschwindigkeit der Schneide in Schneidrichtung sowie dem Schneidpfad den mindestens einen Schneidparameter zu verändern. Die erste Vergleichseinheit ist vorzugsweise Bestandteil der Kontrolleinheit. Bei ansonsten konstanten Schneidparametern bedeutet eine höhere Bewegungsgeschwindigkeit sowie eine engere Kurve des Schneidpfads eine Vergrößerung der IST-Seitenkraft. Eine SOLL-Seitenkraft beträgt vorzugsweise 0 N beziehungsweise ist in einem derart engen Toleranzfeld um 0 N festgelegt, dass eine durch eine entsprechende IST-Seitenkraft verursachte seitliche Auslenkung der Schneide im Toleranzbereich des zu erzeugenden Schnitts liegt. Bei einem Überschreiten der SOLL-Seitenkraft muss der mindestens eine Schneidparameter, wie z.B. Anstellwinkel und/oder Vor- beziehungsweise Nachlaufwinkel, entsprechend verändert werden, um eine derartige IST-Seitenkraft zu kompensieren beziehungsweise zumindest teilweise zu kompensieren und somit zu gewährleisten, dass die Schneide auf dem Schneidpfad beziehungsweise innerhalb eines definierten Toleranzbereichs um den Schneidpfad verbleibt. Um einen Regelaufwand zu reduzieren, kann vorgesehen sein, dass bei einer festgelegten SOLL-Seitenkraft von über 0 N der mindestens eine Schneidparameter erst dann verändert wird, wenn die IST-Seitenkraft die SOLL-Seitenkraft überschreitet. Auf diese Weise muss bei besonders geringen, tolerierbaren IST-Seitenkräften kein Eingriff durch die Kontrolleinheit erfolgen, so dass hierdurch ggf. Energie eingespart und ein Verschleiß der Vorrichtung reduziert werden können.

Vorzugsweise ist die Kontrolleinheit ausgebildet, als Schneidparameter einen Anstellwinkel der Schneide zum Werkstück in Abhängigkeit der gemessenen IST-Seitenkraft zu verändern. Vorzugsweise ist der Anstellwinkel der Schneide auf derselben Ebene wie die IST-Seitenkraft ausgebildet, um diese besser zu kompensieren. Dafür ist die Kontrolleinheit vorzugsweise ausgebildet, den Anstellwinkel der Schneide zum Werkstück in Abhängigkeit der ermittelten IST-Seitenkraft derart anzupassen, dass die IST-Seitenkraft hierdurch vollständig oder im Wesentlichen vollständig kompensiert wird. Somit ist mit einfachen Mitteln sowie auf kostengünstige Art und Weise die IST-Seitenkraft während des Schneidprozesses kompensierbar, so dass die Schneide auf dem Schneidpfad verbleibt. Auf diese Weise ist der erzeugte Schnitt weiter verbesserbar.

Weiter bevorzugt weist die Vorrichtung eine zweite Kraftmessvorrichtung auf, die zum Messen einer quer zur Schneidlängsachse sowie in Schneidrichtung ausgebildeten IST-Schneidkraft ausgebildet ist. Die IST-Schneidkraft ist insbesondere von einer Bewegungsgeschwindigkeit der Schneide entlang dem Schneidpfad sowie einem Verschleißzustand der Schneide abhängig. Durch regelmäßiges, vorzugsweise permanentes beziehungsweise im Wesentlichen permanentes, Messen der IST-Schneidkraft sind somit Aussagen über den Verschleißzustand der Schneide treffbar. Vorzugsweise ist die Vorrichtung ausgebildet, den Verschleißzustand beziehungsweise das Erreichen eines bestimmten Verschleißzustands, vorzugsweise akustisch und/oder optisch, anzuzeigen. Da die IST-Seitenkraft auch vom Verschleiß der Schneide abhängig ist und mit zunehmendem Verschleiß der Schneide steigt, ist auf diese Weise ein rechtzeitiger Austausch der Schneide und somit eine Reduzierung der IST-Seitenkraft bewirkbar.

Es ist bevorzugt, dass die Kontrolleinheit ausgebildet ist, eine Bewegungsgeschwindigkeit der Schneide in Schneidrichtung in Abhängigkeit der IST-Schneidkraft zu verändern. Hierbei ist insbesondere bevorzugt, dass die Bewegungsgeschwindigkeit der Schneide in Schneidrichtung bei zunehmender IST-Schneidkraft reduzierbar ist. Dies hat den Vorteil, dass auch bei teilweise verschlissener Schneide eine vorgegebene Prozesssicherheit sicherstellbar ist.

Erfindungsgemäß kann vorgesehen sein, dass die Vorrichtung eine zweite Vergleichseinheit aufweist, die ausgebildet ist, durch Vergleichen der ermittelten IST-Schneidkraft mit einer vorgegebenen SOLL-Schneidkraft in Abhängigkeit der Bewegungsgeschwindigkeit der Schneide in Schneidrichtung einen Verschleiß der Schneide zu ermitteln. Die zweite Vergleichseinheit ist vorzugsweise Bestandteil der Kontrolleinheit. Die SOLL-Schneidkraft ist beispielsweise empirisch mit einer nicht verschlissenen Schneide ermittelbar. Ein Abweichen der IST-Schneidkraft von der SOLL-Schneidkraft oberhalb einer festgelegten Toleranzgrenze ist ein Indikator für eine verschlissene Schneide. Somit ist ein notwendiger Austausch der Schneide rechtzeitig aufzeigbar.

Vorzugsweise ist die erste Kraftmessvorrichtung in oder an der Schneide und/oder an der Schneidführungsvorrichtung angeordnet. Die erste Kraftmessvorrichtung ist vorzugsweise an einer Schneidenaufnahme der Schneidführungsvorrichtung zur Aufnahme der Schneide angeordnet. Dies hat den Vorteil, dass tatsächlich zwischen dem Werkstück und der Schneide wirkende IST-Seitenkräfte besonders zuverlässig und wenig abgeschwächt ermittelbar sind. Besonders zuverlässige IST-Seitenkraftmesswerte haben den Vorteil, dass eine Regelung des mindestens einen Schneidparameters besonders wirkungsvoll erfolgen kann. Auf diese Weise ist eine Kompensation sowie Reduzierung der IST-Seitenkräfte verbesserbar. Hierdurch wird eine Zuverlässigkeit sowie Prozesssicherheit der Vorrichtung zum Ultraschallschneiden von Werkstoffen mit einfachen Mitteln sowie kostengünstig weiter verbessert.

Gemäß einem zweiten Aspekt der Erfindung wird die Aufgabe erfindungsgemäß gelöst durch ein Verfahren zum Ultraschallschneiden eines Werkstücks mittels einer erfindungsgemäßen Vorrichtung. Das Verfahren weist die folgenden Verfahrensschritte auf:
- Anordnen der Schneide der erfindungsgemäßen Vorrichtung an einer Schnittanfangsstelle an dem Werkstück;
- Versetzen der Schneide in eine oszillierende Bewegung mittels des Ultraschallgenerators;
- Bewegen der Schneide in eine Schneidrichtung entlang einem vorgegebenen Schneidpfad mittels der Schneidführungsvorrichtung;
- Wiederholtes Messen einer quer zur Schneidlängsachse sowie quer zur Schneidrichtung auf die Schneide wirkenden IST-Seitenkraft mittels der ersten Kraftmessvorrichtung; und
- Verändern mindestens eines Schneidparameters der Vorrichtung in Abhängigkeit der gemessenen IST-Seitenkraft mittels der Kontrolleinheit, und vorzugsweise der Schneidführungsvorrichtung.

Beim Bewegen der mit einer Ultraschallfrequenz oszillierenden Schneide entlang dem Schneidpfad wird der Schnitt durch das Werkstück erzeugt. Insbesondere durch Richtungswechsel der Schneide, wie z.B. beim Bewegen entlang einer Kurve des Schneidpfads, entsteht eine IST-Seitenkraft, die mittels der ersten Kraftmessvorrichtung wiederholt, vorzugsweise permanent, gemessen wird. Durch Auswerten der gemessenen IST-Seitenkraft ermittelt die Kontrolleinheit eine Veränderung mindestens eines zu verändernden Schneidparameters zum Kompensieren beziehungsweise zumindest teilweise Kompensieren, insbesondere zur Reduzierung der IST-Seitenkraft. Hierfür kommen Schneidparameter der Vorrichtung sowie sonstige Schneidparameter, wie z.B. Umgebungstemperatur, Werkstücktemperatur, Schneidentemperatur oder Luftfeuchtigkeit in Frage. Der mindestens eine Schneidparameter wird dann zur Kompensation der IST-Schneidkraft entsprechend verändert, beispielsweise mittels der Schneidführungsvorrichtung oder dem Ultraschallgenerator.

Bei dem beschriebenen Verfahren ergeben sich sämtliche Vorteile, die bereits zu einer Vorrichtung zum Ultraschallschneiden von Werkstücken gemäß dem ersten Aspekt der Erfindung beschrieben worden sind.

Es ist bevorzugt, dass einer der mindestens einen Schneidparameter der Vorrichtung in Abhängigkeit der gemessenen IST-Seitenkraft verändert wird. Schneidparameter der Vorrichtung sind beziehungsweise Anstellwinkel der Schneide, Vor- beziehungsweise Nachlaufwinkel der Schneide, Bewegungsgeschwindigkeit der Schneide in Schneidrichtung entlang dem Schneidpfad, Oszillationsfrequenz oder Oszillationsamplitude der Schneide. Ein Ändern von Schneidparametern der Vorrichtung hat den Vorteil, dass dies direkt beziehungsweise ohne nennenswerte zeitliche Verzögerungen erfolgen kann und somit besonders schnell auf eine Veränderung der IST-Seitenkraft reagiert werden kann, um die IST-Seitenkraft effizient zu kompensieren und somit einen Verbleib der Schneide auf dem Schneidpfad sicherzustellen.

Vorzugsweise wird als Schneidparameter der Anstellwinkel der Schneide zum Werkstück derart verändert, dass die IST-Seitenkraft vollständig kompensiert wird. Das bedeutet, dass eine von der IST-Seitenkraft bewirkte Auslenkung der Schneide, die auch vom Material sowie geometrischen Ausbildung der Schneide abhängig ist, durch Verändern des Anstellwinkels ausgeglichen beziehungsweise im Wesentlichen ausgeglichen wird. Dabei wird der Anstellwinkel beispielsweise derart verändert, dass die Schneide auf dem Schneidpfad bleibt. Hierdurch wird eine Qualität des Schnitts auch bei hohen IST-Seitenkräften, die z.B. in engen Kurven des Schnittpfads auftreten können, sichergestellt ist. Ferner sind somit höhere durchschnittliche Bewegungsgeschwindigkeiten der Schneide entlang dem Schneidpfad erzielbar, ohne hierdurch die Qualität des Schnitts negativ zu beeinflussen.

Weiter bevorzugt wird eine zu erwartende Veränderung der IST-Seitenkraft in Abhängigkeit des Verlaufs des Schneidpfads ermittelt und unter Berücksichtigung der ermittelten zu erwartenden Veränderung der IST-Seitenkraft der Anstellwinkel der Schneide zum Werkstück dem Schneidpfad angepasst. Eine derartige Ermittlung erfolgt vorzugsweise vorauslaufend, kurz bevor die Schneide an dem entsprechenden Punkt des Schneidpfads angekommen ist. Insbesondere bei besonders engen Kurven kann somit eine Anpassung des mindestens einen Schneidparameters bereits kurz vor der Kurve eingeleitet werden, wobei stets ein Ausbrechen der Schneide aus einem Toleranzbereich um den Schneidpfad vermieden wird. Dies hat den Vorteil, dass eine zu erwartende Veränderung der IST-Seitenkraft bereits vorhersehbar ist und eine Anpassung des mindestens einen Schneidparameters nicht erst dann erfolgt, wenn die IST-Seitenkraft bereits wesentlich erhöht ist. Somit kann eine Kompensation der IST-Seitenkraft verbessert beziehungsweise harmonisiert werden. Ferner sind somit höhere Bewegungsgeschwindigkeiten der Schneide möglich, da bereits vor einer Erhöhung der IST-Seitenkraft entsprechende Schneidparameter anpassbar sind beziehungsweise angepasst werden.

Eine erfindungsgemäße Vorrichtung zum Ultraschallschneiden von Werkstücken wird nachfolgend anhand von Zeichnungen näher erläutert. Es zeigen jeweils schematisch:
- Figur 1a: in einer Frontansicht eine Ultraschallschneidevorrichtung nach dem Stand der Technik,
- Figur 1b: in einer Frontansicht die Ultraschallschneidevorrichtung aus Figur 1a mit einer Seitenkraft,
- Figur 2a: in einer Frontansicht eine bevorzugte Ausführungsform einer erfindungsgemäßen Vorrichtung,
- Figur 2b: in einer Frontansicht die Vorrichtung aus Figur 2a mit einer Seitenkraft, und
- Figur 3: in einer Draufsicht ein zu schneidendes Werkstück mit Schneidpfad.

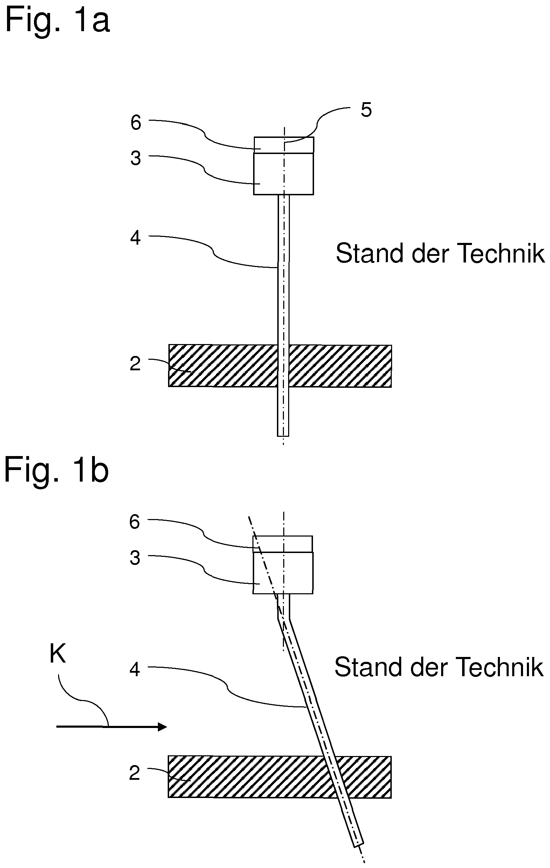

Elemente mit gleicher Funktion und Wirkungsweise sind in den Fig. 1a bis 3 jeweils mit denselben Bezugszeichen versehen.

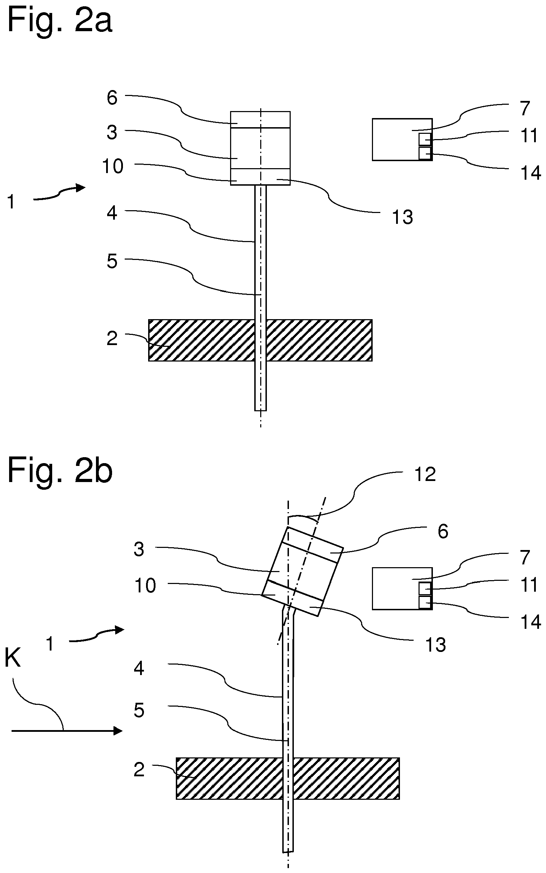

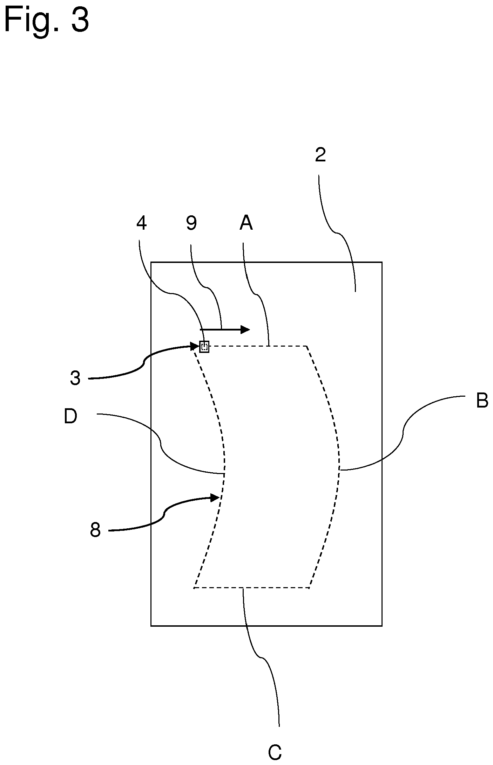

In Fig. 1a und Fig. 1b ist eine Ultraschallscheidevorrichtung nach dem Stand der Technik in einer Frontansicht schematisch dargestellt. Die Ultraschallscheidevorrichtung weist eine Schneidführungsvorrichtung 3 auf, an der eine Schneide 4 mit einer Schneidlängsachse 5 sowie ein Ultraschallgenerator 6 zum Versetzen der Schneide 4 in Ultraschallschwingungen angeordnet sind. Die Schneide 4 ist in einem Werkstück 2 angeordnet, um dieses zu schneiden. In Fig. 1a ist ein Idealfall gezeigt, z.B. bei einer geraden Schneidrichtung 9 (vgl. Fig. 3), in dem keine IST-Seitenkraft K zwischen Werkstück 2 und Schneide 4 wirkt. Die Schneidrichtung 9 geht in den Fig. 1a bis 2b in die Zeichenebene hinein. In Fig. 1b wirkt eine IST-Seitenkraft K seitlich auf die Schneide 4. Ohne ein verändern eines Anstellwinkels 12 (vgl. Fig. 2b) der Schneide 4 wird diese durch die IST-Seitenkraft K seitlich, in dieser Darstellung nach rechts, gedrückt. Es entsteht ein fehlerhafter Schnitt. Um dies zu vermeiden sind nach dem Stand der Technik zunächst die IST-Seitenkräfte K aufwändig empirisch zu bestimmen, um eine erforderliche Anpassung der Schneidparameter, insbesondere des Anstellwinkels 12 der Schneide, zu bestimmen. Dies ist sehr aufwändig sowie zeit- und kostenintensiv.

In Fig. 2a und Fig. 2b ist eine bevorzugte Ausführungsform einer erfindungsgemäßen Vorrichtung 1 zum Ultraschallschneiden von Werkstücken 2 in einer Frontansicht schematisch dargestellt. Die Vorrichtung 1 weist eine Schneidführungsvorrichtung 3 auf, an der eine Schneide 4 mit einer Schneidlängsachse 5 angeordnet ist. An der Schneidführungsvorrichtung 3 ist ein Ultraschallgenerator 6 zum Versetzen der Schneide 4 in Ultraschallschwingungen mit einer Schwingungsamplitude angeordnet. Auf einer der Schneide 4 zugewandten Seite der Schneidführungsvorrichtung 3 ist eine erste Kraftmessvorrichtung 10 zum Messen der IST-Seitenkraft K sowie eine optionale zweite Kraftmessvorrichtung 13 zum Messen der IST-Schneidkraft S angeordnet. Die Vorrichtung 1 weist eine Kontrolleinheit 7 mit einer ersten Vergleichseinheit 11 zum Vergleichen der IST-Seitenkraft K mit einer SOLL-Seitenkraft und einer zweiten Vergleichseinheit 14 zum Vergleichen der IST-Schneidkraft S mit einer SOLL-Schneidkraft auf. Die zweite Vergleichseinheit 14 kann zusätzlich vorhanden sein. Eine einfache erfindungsgemäße Vorrichtung 1 zum Ultraschallschneiden von Werkstücken 2 weist nur die erste Vergleichseinheit 11 auf. Die Kontrolleinheit 7 ist mit der ersten Kraftmessvorrichtung 10 und der zweiten Kraftmessvorrichtung 13 zum Empfangen der gemessenen IST-Seitenkraft K beziehungsweise IST-Schneidkraft S gekoppelt.

Die Schneide 4 ist in einem Werkstück 2 zum Schneiden des Werkstücks 2 entlang einem Schneidpfad 8 (vgl. Fig. 3) angeordnet. In Fig. 2a wirkt keine IST-Seitenkraft K zwischen dem Werkstück 2 und der Schneide 4. Ein Anstellwinkel der Schneide 4 beträgt daher 0°. In Fig. 2b wirkt eine IST-Seitenkraft K auf die Schneide 4, die eine Verbiegung der Schneide 4 bewirkt. Diese Verbiegung ist durch eine entsprechende Anpassung des Anstellwinkels 12 in diesem Beispiel vollständig kompensiert. Die Schneide 4 verbleibt auf dem Schneidpfad 8, so dass eine hohe Qualität des Schnitts sichergestellt wird.

In Fig. 3 ist ein zu schneidendes Werkstück 2 in einer Draufsicht dargestellt. Ein Schneidpfad 8 mit einem ersten Pfadabschnitt A, einem zweiten Pfadabschnitt B, einem dritten Pfadabschnitt C sowie einem vierten Pfadabschnitt D ist als gestrichelte Linie dargestellt. Eine von einer Schneidführungsvorrichtung 3 gehaltene Schneide 4 ist auf dem ersten Pfadabschnitt A angeordnet und ist zum Schneiden des Werkstücks 2 in Schneidrichtung 9 auf dem Schneidpfad 8 bewegbar. Im ersten Pfadabschnitt A beträgt die IST-Seitenkraft K 0 N. Beim Übergang vom ersten Pfadabschnitt A zum zweiten Pfadabschnitt B steigt die IST-Seitenkraft K sprunghaft an, so dass eine Anpassung des Anstellwinkels 12 zur Kompensation der zu erwartenden IST-Seitenkraft K bereits in einem Endbereich des ersten Pfadabschnitts A erfolgen kann, wobei ein Verändern des Anstellwinkels 12 derart erfolgt, dass die Schneide 4 den Schneidpfad 8 nicht verlässt beziehungsweise innerhalb eines Toleranzfeldes um den Schneidpfad 8 verbleibt. Der zweite Pfadabschnitt B weist eine Kurve auf, so dass in dem zweiten Pfadabschnitt B eine IST-Seitenkraft auf die Schneide 4 wirkt, die größer als 0 N ist. Durch ein entsprechendes Verändern des Anstellwinkels 12 ist diese IST-Seitenkraft kompensierbar.

### Bezugszeichenliste

- 1: Vorrichtung
- 2: Werkstück
- 3: Schneidführungsvorrichtung
- 4: Schneide
- 5: Schneidlängsachse
- 6: Ultraschallgenerator
- 7: Kontrolleinheit
- 8: Schneidpfad
- 9: Schneidrichtung
- 10: erste Kraftmessvorrichtung
- 11: erste Vergleichseinheit (
- 12: Anstellwinkel
- 13: zweite Kraftmessvorrichtung
- 14: zweite Vergleichseinheit

- A: erster Pfadabschnitt
- B: zweiter Pfadabschnitt
- C: dritter Pfadabschnitt
- D: vierter Pfadabschnitt
- K: IST-Seitenkraft
- S: IST-Schneidkraft

## Patentansprüche

1. Vorrichtung (1) zum Ultraschallschneiden von Werkstücken (2), aufweisend eine Schneidführungsvorrichtung (3), eine an der Schneidführungsvorrichtung (3) gehaltene Schneide (4) mit einer Schneidlängsachse (5), einen Ultraschallgenerator (6) zum Versetzen der Schneide (4) in eine oszillierende Bewegung und eine Kontrolleinheit (7) zum Bewegen der Schneidführungsvorrichtung (3) zum Bewegen der Schneide (4) auf einem Schneidpfad (8) in eine Schneidrichtung (9) relativ zu dem zu schneidenden Werkstück (2),
**dadurch gekennzeichnet,**
**dass** die Vorrichtung (1) eine erste Kraftmessvorrichtung (10) zum Messen einer quer zur Schneidlängsachse (5) sowie quer zur Schneidrichtung (9) auf die Schneide (4) wirkenden IST-Seitenkraft (K) aufweist, wobei die erste Kraftmessvorrichtung (10) zur Weiterleitung von IST-Seitenkraftmesswerten an die Kontrolleinheit (7) mit der Kontrolleinheit (7) gekoppelt ist, und wobei die Kontrolleinheit (7) ausgebildet ist, mindestens einen Schneidparameter der Vorrichtung (1) in Abhängigkeit der gemessenen IST-Seitenkraft (K) zu verändern.

2. Vorrichtung (1) nach Anspruch 1,
**dadurch gekennzeichnet,**
**dass** die erste Kraftmessvorrichtung (10) zum Messen einer senkrecht zur Schneidlängsachse (5) sowie senkrecht zur Schneidrichtung (9) auf die Schneide (4) wirkenden IST-Seitenkraft (K) ausgebildet ist.

3. Vorrichtung (1) nach Anspruch 1 oder 2,
**dadurch gekennzeichnet,**
**dass** die Vorrichtung (1) eine erste Vergleichseinheit (11) aufweist, die ausgebildet ist, durch Vergleichen der ermittelten IST-Seitenkraft (K) mit einer vorgegebenen SOLL-Seitenkraft in Abhängigkeit der Bewegungsgeschwindigkeit der Schneide (4) in Schneidrichtung (9) sowie dem Schneidpfad (8) den mindestens einen Schneidparameter zu verändern.

4. Vorrichtung (1) nach wenigstens einem der vorangegangenen Ansprüche,
**dadurch gekennzeichnet,**
**dass** die Kontrolleinheit (7) ausgebildet ist, als Schneidparameter einen Anstellwinkel (12) der Schneide (4) zum Werkstück (2) in Abhängigkeit der gemessenen IST-Seitenkraft (K) zu verändern.

5. Vorrichtung (1) nach wenigstens einem der vorangegangenen Ansprüche,
**dadurch gekennzeichnet,**
**dass** die Vorrichtung (1) eine zweite Kraftmessvorrichtung (13) aufweist, die zum Messen einer quer zur Schneidlängsachse (5) sowie in Schneidrichtung (9) ausgebildeten IST-Schneidkraft (S) ausgebildet ist.

6. Vorrichtung (1) nach Anspruch 5,
**dadurch gekennzeichnet,**
**dass** die Kontrolleinheit (7) ausgebildet ist, eine Bewegungsgeschwindigkeit der Schneide (4) in Schneidrichtung (9) in Abhängigkeit der IST-Schneidkraft (S) zu verändern.

7. Vorrichtung (1) nach Anspruch 5 oder 6,
**dadurch gekennzeichnet,**
**dass** die Vorrichtung (1) eine zweite Vergleichseinheit (14) aufweist, die ausgebildet ist, durch Vergleichen der ermittelten IST-Schneidkraft (S) mit einer vorgegebenen SOLL-Schneidkraft in Abhängigkeit der Bewegungsgeschwindigkeit der Schneide (4) in Schneidrichtung (9) einen Verschleiß der Schneide (4) zu ermitteln.

8. Vorrichtung (1) nach wenigstens einem der vorangegangenen Ansprüche,
**dadurch gekennzeichnet,**
**dass** die erste Kraftmessvorrichtung (10) in oder an der Schneide (4) und/oder an der Schneidführungsvorrichtung (3) angeordnet ist.

9. Verfahren zum Ultraschallschneiden eines Werkstücks (2) mittels einer Vorrichtung (1) nach wenigstens einem der vorangegangenen Ansprüche, aufweisend folgende Verfahrensschritte:
- Anordnen der Schneide (4) der Vorrichtung (1) an einer Schnittanfangsstelle an dem Werkstück (2);
- Versetzen der Schneide (4) in eine oszillierende Bewegung mittels des Ultraschallgenerators (6);
- Bewegen der Schneide (4) in eine Schneidrichtung (9) entlang einem vorgegebenen Schneidpfad (8) mittels der Schneidführungsvorrichtung (3);
- Wiederholtes Messen einer quer zur Schneidlängsachse (5) sowie quer zur Schneidrichtung (9) auf die Schneide (4) wirkenden IST-Seitenkraft (K) mittels der ersten Kraftmessvorrichtung (10); und
- Verändern mindestens eines Schneidparameters der Vorrichtung (1) in Abhängigkeit der gemessenen IST-Seitenkraft (K) mittels der Kontrolleinheit (7).

10. Verfahren nach Anspruch 9,
**dadurch gekennzeichnet,**
**dass** einer der mindestens einen Schneidparameter der Vorrichtung (1) in Abhängigkeit der gemessenen IST-Seitenkraft (K) verändert wird.

11. Verfahren nach Anspruch 9 oder 10,
**dadurch gekennzeichnet,**
**dass** als Schneidparameter der Anstellwinkel (12) der Schneide (4) zum Werkstück (2) derart verändert wird, dass die IST-Seitenkraft (K) vollständig kompensiert wird.

12. Verfahren nach einem der Ansprüche 9 bis 11,
**dadurch gekennzeichnet,**
**dass** eine zu erwartende Veränderung der IST-Seitenkraft (K) in Abhängigkeit des Verlaufs des Schneidpfads (8) ermittelt und unter Berücksichtigung der ermittelten zu erwartenden Veränderung der IST-Seitenkraft (K) der Anstellwinkel (12) der Schneide (4) zum Werkstück (2) dem Schneidpfad (8) angepasst wird.

## Claims

1. A device (1) for ultrasonic cutting of workpieces (2), having a cutting guide device (3), a cutting edge (4), held on the cutting guide device (3), with a longitudinal cutting axis (5), an ultrasonic generator (6) for setting the cutting edge (4) into an oscillating motion and a control unit (7) for moving the cutting guide device (3) for moving the cutting edge (4) on a cutting path (8) in a cutting direction (9) relative to the workpiece (2) which is to be cut,
**characterised in that**
the device (1) has a first force measurement device (10) for measuring an actual lateral force (K) acting on the cutting edge (4) transversely to the longitudinal cutting axis (5) and also transversely to the cutting direction (9), wherein the first force measurement device (10) is coupled with the control unit (7) for relaying actual lateral force measured values to the control unit (7), and wherein the control unit (7) is designed to change at least one cutting parameter of the device (1) dependent on the measured actual lateral force (K).

2. A device (1) according to Claim 1,
**characterised in that**
the first force measurement device (10) is designed to measure an actual lateral force (K) acting on the cutting edge (4) perpendicularly to the longitudinal cutting axis (5) and also perpendicularly to the cutting direction (9).

3. A device (1) according to Claim 1 or Claim 2,
**characterised in that**
the device (1) has a first comparison unit (11) which is designed to change the at least one cutting parameter by comparing the ascertained actual lateral force (K) with a specified desired lateral force dependent on the speed of movement of the cutting edge (4) in the cutting direction (9) and the cutting path (8).

4. A device (1) according to at least one of the preceding claims,
**characterised in that**
the control unit (7) is designed to change as cutting parameter an angle of attack (12) of the cutting edge (4) relative to the workpiece (2) dependent on the measured actual lateral force (K).

5. A device (1) according to at least one of the preceding claims,
**characterised in that**
the device (1) has a second force measurement device (13) which is designed to measure an actual cutting force (S) formed transversely to the longitudinal cutting axis (5) and in the cutting direction (9).

6. A device (1) according to Claim 5,
**characterised in that**
the control unit (7) is designed to change a speed of movement of the cutting edge (4) in the cutting direction (9) dependent on the actual cutting force (S).

7. A device (1) according to Claim 5 or Claim 6,
**characterised in that**
the device (1) has a second comparison unit (14) which is designed to ascertain wear of the cutting edge (4) by comparing the ascertained actual cutting force (S) with a specified desired cutting force dependent on the speed of movement of the cutting edge (4) in the cutting direction (9).

8. A device (1) according to at least one of the preceding claims,
**characterised in that**
the first force measurement device (10) is arranged in or on the cutting edge (4) and/or on the cutting guide device (3).

9. A method for ultrasonic cutting of a workpiece (2) by means of a device (1) according to at least one of the preceding claims, having the following method steps:
- arranging the cutting edge (4) of the device (1) at a cutting start point on the workpiece (2);
- setting the cutting edge (4) into an oscillating motion by means of the ultrasonic generator (6);
- moving the cutting edge (4) in a cutting direction (9) along a specified cutting path (8) by means of the cutting guide device (3);
- repeatedly measuring an actual lateral force (K) acting on the cutting edge (4) transversely to the longitudinal cutting axis (5) and also transversely to the cutting direction (9) by means of the first force measurement device (10); and
- changing at least one cutting parameter of the device (1) dependent on the measured actual lateral force (K) by means of the control unit (7).

10. A method according to Claim 9,
**characterised in that**
one of the at least one cutting parameters of the device (1) is changed dependent on the measured actual lateral force (K).

11. A method according to Claim 9 or Claim 10,
**characterised in that**
as cutting parameter the angle of attack (12) of the cutting edge (4) relative to the workpiece (2) is changed such that the actual lateral force (K) is fully compensated.

12. A method according to one of Claims 9 to 11,
**characterised in that**
a change in the actual lateral force (K) which is to be expected is ascertained dependent on the course of the cutting path (8) and taking into account the ascertained change in the actual lateral force (K) which is to be expected the angle of attack (12) of the cutting edge (4) relative to the workpiece (2) is adapted to the cutting path (8).

## Revendications

1. Dispositif [1) pour la coupe aux ultrasons de pièces (2), comportant un dispositif guide-coupe (3), une lame (4) portée par le dispositif guide coupe (3) d'axe longitudinal (5), un générateur d'ultrasons (6) pour mettre la lame (4) en oscillations et une unité de commande (7) pour déplacer le dispositif guide coupe (3) pour déplacer la lame (4) sur un chemin de coupe (8) dans une direction de coupe (9) par rapport à la pièce à découper (2),
dispositif (1) **caractérisé en ce qu'**il comprend
un premier dispositif de mesure de force (10) pour mesurer la force latérale réelle (K) agissant transversalement à l'axe longitudinal de coupe (5) ainsi que transversalement à la direction de coupe (9) sur la lame (4), le premier dispositif de mesure de force (10) étant couplé à l'unité de commande (7) pour transmettre les valeurs de mesure de la force latérale réelle à l'unité de commande (7) et l'unité de commande (7) est réalisée de façon à modifier au moins un paramètre de coupe du dispositif (1) en fonction de la force latérale réelle mesurée (K).

2. Dispositif (1) selon la revendication 1,
**caractérisé en ce que**
le premier dispositif de mesure de force (10) est réalisé pour mesurer la force latérale réelle (K) agissant perpendiculairement à l'axe longitudinal de coupe (5) et perpendiculairement à la direction de coupe (9) sur la lame (4).

3. Dispositif (1) selon la revendication 1 ou 2,
**caractérisé en ce qu'**il comporte
une première unité de comparaison (11) pour comparer la force latérale réelle (K) obtenue, à une force latérale de consigne, donnée, en fonction de la vitesse du mouvement de la lame (4) dans la direction de coupe (9) et du chemin de coupe (8) pour modifier au moins un paramètre de coupe.

4. Dispositif (1) selon l'une des revendications précédentes,
**caractérisé en ce que**
l'unité de commande (7) est réalisée de façon à modifier comme paramètre de coupe, l'angle d'attaque (12) de la lame (4) par rapport à la pièce (2) en fonction de la force latérale réelle mesurée (K).

5. Dispositif (1) selon au moins l'une des revendications précédentes,
**caractérisé en ce qu'**
il comporte un second dispositif de mesure de force (13) pour mesurer la force de coupe réelle (S) transversalement à l'axe longitudinal de coupe (5) et dans la direction de coupe (9).

6. Dispositif (1) selon la revendication 5,
**caractérisé en ce que**
l'unité de commande (7) modifie la vitesse de mouvement de la lame (4) dans la direction de coupe (9) en fonction de la force de coupe réelle (S).

7. Dispositif (1) selon la revendication 5 ou 6,
**caractérisé en ce que**
le dispositif (1) a une seconde unité de comparaison (14) pour déterminer l'usure de la lame (4) par la comparaison de la force de coupe, réelle, (S) déterminée et de la force de coupe de consigne, prédéfinie, en fonction de la vitesse de déplacement de la lame (4) dans la direction de coupe (9).

8. Dispositif (1) selon au moins l'une des revendications précédentes,
**caractérisé en ce que**
le premier dispositif de mesure de force (10) est prévu dans la lame (4) ou sur la lame (4) et/ou sur le dispositif guide-coupe (3).

9. Procédé de coupe aux ultrasons d'une pièce (2) à l'aide d'un dispositif (1) selon au moins l'une des revendications précédentes et comprenant les étapes suivantes consistant à :
- installer la lame (4) du dispositif (1) au point initial de coupe sur la pièce (2),
- mettre la lame (4) en oscillations à l'aide du générateur d'ultrasons (6),
- déplacer la lame (4) dans la direction de coupe (9) le long d'un chemin de coupe (8) prédéfini, à l'aide du dispositif guide-coupe (3),
- mesurer de manière répétée la force latérale réelle (K) agissant transversalement à l'axe longitudinal de coupe (5) et transversalement à la direction de coupe (9), sur la lame (4), à l'aide du premier dispositif de mesure de force (10), et
- modifier au moins un paramètre de coupe du dispositif (1) en fonction de la force latérale réelle mesurée (K) à l'aide de l'unité de commande (7).

10. Procédé selon la revendication 9,
**caractérisé en ce qu'**
on modifie l'un au moins des paramètres de coupe du dispositif (1) en fonction de la force latérale réelle (K) mesurée.

11. Procédé selon la revendication 9 ou 10,
**caractérisé en ce que**
comme paramètre de coupe, on modifie l'angle d'attaque (12) de la lame (4) par rapport à la pièce (2) pour compenser complètement la force latérale réelle (K).

12. Dispositif (1) selon l'une des revendications 9 à 11,
**caractérisé en ce qu'**
on détermine la variation prévisible de la force latérale réelle (K) en fonction du tracé du chemin de coupe (8) et en tenant compte de cette variation prévisible déterminée ainsi de la force latérale réelle (K), on adapte l'angle d'attaque (12) de la lame (4) par rapport à la pièce (2) selon le chemin de coupe (8).
